# EUROPÄISCHE PATENTANMELDUNG

(11) **EP 4 559 970 A1**
(43) Veröffentlichungstag der Anmeldung: **28.05.2025**
(21) Anmeldenummer: 23211754.9
(22) Anmeldetag: 23.11.2023
(51) Int. Cl.: C08L 23/26, C08L 9/06

(54) **POLYISOBUTENDERIVATE ALS ADDITIV IN KAUTSCHUKEN**

(71) Anmelder: BASF SE, 67056 Ludwigshafen am Rhein (DE)
(72) Erfinder: WESP, Svenja, 67056 Ludwigshafen am Rhein (DE); MUSTONEN, Tero, 67056 Ludwigshafen am Rhein (DE); FELDMANN, Oliver, 67056 Ludwigshafen am Rhein (DE); RAMADANI, Fehime, 67056 Ludwigshafen am Rhein (DE); LEDERHOSE, Paul, 67056 Ludwigshafen am Rhein (DE)
(74) Vertreter: BASF IP Association

(57) **Zusammenfassung**

Die vorliegende Erfindung betrifft die Verwendung schwefelhaltiger Polyisobutenderivate als Additive in Kautschuken, besonders zur Dispergierung und Kompatibilisierung von Zusatzstoffen in Kautschuken für Fahrzeugreifen, als Vulkanisationsbeschleuniger sowie zur Verbesserung der Reifeneigenschaften.

## Beschreibung

Die vorliegende Erfindung betrifft die Verwendung schwefelhaltiger Polyisobutenderivate als Additive in Kautschuken, besonders zur Dispergierung und Kompatibilisierung von Zusatzstoffen in Kautschuken für Fahrzeugreifen, als Vulkanisationsbeschleuniger sowie zur Verbesserung der Reifeneigenschaften.

Bei modernen Fahrzeugreifen werden erhöhte Anforderungen an deren Eigenschaften nicht zuletzt unter Nachhaltigkeitsaspekten gestellt, insbesondere an einen geringen Rollwiderstand, um den Kraftstoffverbrauch und damit verbundene Emissionen zu senken, und eine hohe Abriebsfestigkeit, um die Emission von Reifenabrieb, beispielsweise in Form von Mikroplastik, an die Umgebung zu verringern und die Lebensdauer der Reifen zu erhöhen, ohne gleichzeitig die Haftung der Reifen auf dem Untergrund unter verschiedenen Bedingungen (z.B. Temperatur, Wetterbedingungen, Straßenzustand) zu verschlechtern.

In den Kautschukmassen können die Fahrzeugreifen zur Verbesserung dieser Eigenschaften verschiedene Füllmaterialien sowie Vulkanisationsbeschleuniger enthalten. Bei den Füllmaterialien handelt es sich häufig um anorganische Materialien, wie Ruß, Silikate oder Zinkoxid, bei den Kautschuken dagegen um unpolare Polymere, somit ist die Mischbarkeit und Verträglichkeit dieser Komponenten aufgrund ihrer unterschiedlichen Polarität oftmals schlecht. Bei anderen Additiven, wie Vulkanisationsbeschleunigern und -aktivatoren, Antioxidantien sowie Plastifizierern, ist eine einheitliche Verteilung innerhalb des Kautschuks erforderlich, damit sie gleichmäßig ihre Wirkung entfalten können.

Somit besteht ein Bedarf an Additiven, mit denen Füllmaterialien, wie Ruß, Silikate oder Zinkoxid, sowie die anderen genannten Additive besser in Kautschuke eingearbeitet werden können und die Funktionen in den Kautschuken bzw. bei deren Herstellung erfüllen können, beispielsweise als Antioxidans, Aktivator oder Plastifizierer.

WO 2022/223345 A1 beschreibt die Verwendung von Polyisobutenderivaten, enthaltend mindestens eine Sulfid- oder Mercaptogruppe zur Kompatibilisierung und/oder als Dispergiermittel für Schwefel in Kautschuken sowie als Vulkanisierungsagens.

Die Dispergierung anderer Zuschlagstoffe als Schwefel wird nicht offenbart. Ferner wird der Einfluss auf die Eigenschaften des fertigen Reifens nicht erkannt.

Die Aufgabe wurde gelöst durch die Verwendung von Umsetzungsprodukten von Polyisobuten einem Molekulargewicht Mn von 104 bis 100000 g/mol, bevorzugt von 104 bis 10000 g/mol, besonders bevorzugt von 156 bis 5000 g/mol und ganz besonders bevorzugt von 500 bis 2500 g/mol, bevorzugt hochreaktivem Polyisobuten, mit elementarem Schwefel sowie deren Hydrolyseprodukte zur Verbesserung mindestens einer der folgenden Eigenschaften
- Dispersionskoeffizient
- Teilchengröße
- Nasshaftung
- Abriebsfestigkeit
- Rollwiderstand

von Kautschuke-enthaltenden Reifen
oder zur Beschleunigung der Vulkanisation in Kautschukmassen,
oder zum Abfangen von Alkoholen, die während der Reifenherstellung freigesetzt werden.

Herstellungsbedingt handelt es sich bei dem eingesetzten Polyisobuten um ein Gemisch von Doppelbindungsisomeren, die die Eigenschaften und besonders die chemische Reaktivität des Polyisobuten bestimmen. Die wichtigsten sind Isomere mit alpha-Doppelbindungen 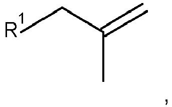 sowie Isomere mit beta-Doppelbindungen 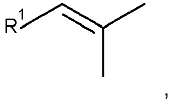 worin
der Rest R¹ für den Rest des Polyisobuten ohne die gezeigte Substruktur steht, also das um eine Isobuteneinheit verkürzte Polyisobuten mit einem Molekulargewicht Mn von 104 bis 100000 g/mol, bevorzugt von 104 bis 10000 g/mol, besonders bevorzugt von 156 bis 5000 g/mol und ganz besonders bevorzugt von 500 bis 2500 g/mol, das als Ausgangsmaterial eingesetzt wurde.

Des weiteren sind noch weitere Isomere denkbar, wie sie beispielsweise in WO 2023/152258 gezeigt sind, die erfindungsgemäß jedoch lediglich eine untergeordnete Rolle spielen.

Erfindungsgemäß weist das Polyisobuten ein zahlenmittleres Molekulargewicht Mn von 104 bis 100000 g/mol, bevorzugt von 104 bis 10000 g/mol, besonders bevorzugt von 156 bis 5000 g/mol und ganz besonders bevorzugt von 500 bis 2500 g/mol auf.

Das Molekulargewicht wird bestimmt durch Gelpermeationschromatographie mit Polystyrol als Standard.

In einer bevorzugten erfindungsgemäßen Ausführungsform weist das Polyisobuten ein zahlenmittleres Molekulargewicht Mn von 300 bis zu 10000 g/mol auf, bevorzugt von 500 bis 5000, besonders bevorzugt von 700 bis 2500 und einen Gehalt an alpha-Doppelbindungen von mindestens 70% auf, bevorzugt mindestens 75, besonders bevorzugt mindestens 80, ganz besonders bevorzugt mindestens 85 und insbesondere mindestens 90% auf. Ein derartiges Polyisobuten wird auch als niedermolekulares und hochreaktives Polyisobuten bezeichnet.

Der Gehalt an beta-Doppelbindungen kann bis zu 25%, bevorzugt bis zu 20, besonders bevorzugt bis zu 15, ganz besonders bevorzugt bis zu 10 und insbesondere bis zu 5% betragen.

Der Gehalt an anderen Isomeren als solchen mit alpha- oder beta-Doppelbindungen beträgt meist nicht mehr als 5%.

Der Gehalt an Isomeren wird mit Hilfe der ¹H-NMR Spektroskopie bestimmt, wobei die Empfindlichkeit durch die Frequenz des Messgerätes festgelegt wird. Bevorzugt wird die ¹H-NMR Spektroskopie mit 700 MHz bei 25 °C ausgeführt. Besonders bevorzugt werden die Isomere identifiziert nach der Methode wie beschrieben in Guo et al., Journal or Polymer Science, Part A: Polymer Chemistry, 2013, 51, 4200-4212.

In einer weiteren bevorzugten Ausführungsform weist das eingesetzte Polyisobuten ein zahlenmittleres Molekulargewicht Mn von mehr als 10000 bis zu 100000 g/mol auf, bevorzugt von 11000 bis 90000, besonders bevorzugt von 12000 bis 80000, ganz besonders bevorzugt von 13000 bis 75000 und insbesondere von 14000 bis 70000 und einen Gehalt an alpha-Doppelbindungen von mindestens 20 bis 60% auf, bevorzugt mindestens 25 bis 45, besonders bevorzugt mindestens 30 bis 40% auf. Ein derartiges Polyisobuten wird auch als mittelmolekulares Polyisobuten bezeichnet.

Denkbar, wenn auch weniger bevorzugt, ist der Einsatz von hochmolekularem Polyisobuten mit einem zahlenmittleren Molekulargewicht von mehr als 100000 bis zu 5000000 g/mol, das in der Regel einen Gehalt an alpha-Doppelbindungen von nicht mehr als 50%, bevorzugt nicht mehr als 40% und besonders bevorzugt nicht mehr als 30% aufweist.

In einer weiteren Ausführungsform handelt es sich bei dem eingesetzten Polymer anstelle von Polyisobuten um ein Produkt aus der Polymerisation von 1- und/oder 2-Buten, besonders 1-Buten oder einem butenhaltigen Monomerengemisch. In diesem Fall handelt es sich bei den Verbindungen nicht um Polyisobutenderivate, sondern um Polybutenderivate.

In einer weiteren Ausführungsform handelt es sich bei dem Rest eingesetzten Polymer anstelle von Polyisobuten um ein Produkt aus der Polymerisation von Propen oder einem propenhaltigen Monomerengemisch. In diesem Fall handelt es sich bei den Verbindungen nicht um Polyisobutenderivate, sondern um Polypropenderivate.

Das hochreaktive Polyisobuten wird mit elementarem Schwefel unter solchen Reaktionsbedingungen umgesetzt, dass die reaktive Doppelbindung des Polyisobuten mit dem Schwefel reagiert. Beispielhafte Reaktionsbedingungen sind beschrieben in WO 2009/010441 A2, siehe dort Herstellungsbeispiel (B3).

Bevorzugt wird Polyisobuten mit 3 bis 10 Äquivalenten elementarem Schwefel, bevorzugt überwiegend in Form von Ss-Molekülen, je alpha-Doppelbindung im Polyisobuten für 0,5 bis 5 Stunden bei 150 bis 260, bevorzugt 170 bis 250 °C bevorzugt unter Inertgas bei normalem oder optional unter Überdruck umgesetzt.

Gemäß der WO 2009/010441 A2 entstehen als Hauptkomponenten im Reaktionsgemisch die beiden Heterocyclen 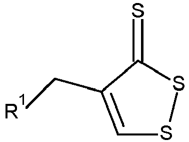 und

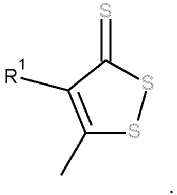

In einer bevorzugten Ausführungsform enthalten die erfindungsgemäß verwendbaren Umsetzungsprodukte also mindestens eines dieser beiden heterocyclischen Produkte, besonders bevorzugt ein Gemisch dieser beiden heterocyclischen Produkte.

Aus den Umsetzungsprodukten können durch Hydrolyse thiolgruppentragende Polyisobutenderivate erhalten werden, die ebenfalls für die erfindungsgemäße Verwendung eingesetzt werden können.

Bei diesen Umsetzungsprodukten kann es sich beispielsweise um Verbindungen der folgenden Formeln handeln:

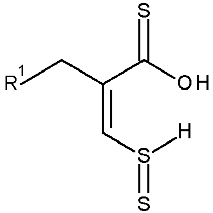

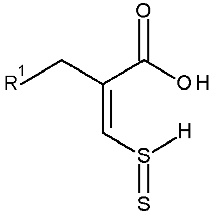

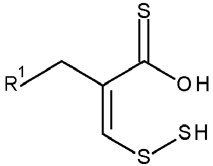

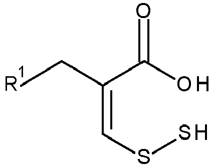

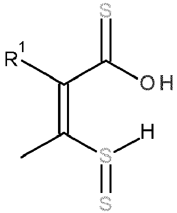

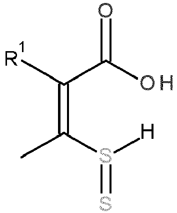

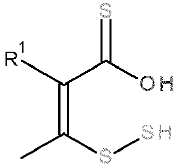

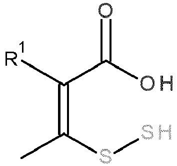

### Die Erfindung wird im folgenden näher erläutert:

### Kautschuk

In Fahrzeugreifenmischungen, insbesondere für die Laufflächen, werden beispielhaft Mischungen von Butylkautschuk mit Dien-Elastomeren und andere Bestandteile eingesetzt. Derartige Mischungen sind beispielsweise beschrieben in WO2019/199839 A1, Absatz [0008] bis [0070], was durch Bezugnahme Bestandteil der vorliegenden Offenbarung sei.

Unter den Kautschuken werden im Rahmen dieser Schrift Dien-Elastomere, also Homo- und Copolymere von Dien-Monomeren verstanden, bevorzugt Naturkautschuk, Polybutadiene, Styrol-Butadien-Copolymere und Polyisopren und deren Mischungen, beispielsweise Mischungen aus Naturkautschuk und Styrol-Butadien-Copolymeren, aus Naturkautschuk und Polybutadienen oder Naturkautschuk und Polyisoprenen.

Die Dien-Elastomere weisen in der Regel eine Glasübergangstemperatur Tg von -75 bis 0 °C auf

### Polybutadiene

Bei diesen handelt es sich um Polymere von 1,3-Dienen, bevorzugt Buta-1,3-dien mit einer cis-1,4-Verknüpfung von mindestens 90%, bevorzugt mindestens 95%.

Andere Comonomere können in geringen Mengen einpolymerisiert werden.

Das verwendete Elastomer ist vorzugsweise Polybutadien mit mehr als 90% cis-1,4-Verknüpfungen, das nach bekannten Katalyseverfahren mit Übergangsmetallverbindungen erhalten ist, wie beispielsweise in der französischen Patentanmeldung FR-A-1436607 beschrieben ist.

Beispiele für geeignete konjugierte Diene sind insbesondere 1,3-Butadien, Isopren und 2,3-Dimethyl-1,3-butadien. Es können auch aromatische Vinylverbindungen einpolymerisiert werden, geeignete aromatische Vinylverbindungen sind insbesondere Styrol, o-, m- und p-Methylstyrol oder das handelsübliche "Vinyltoluol"-Gemisch.

### Styrol-Butadien-Copolymere

Typische Styrol-Butadien-Copolymere weisen einen Gehalt von Styrol von 5 bis 60, bevorzugt 20 bis 50 Gew% auf, wobei die restlichen Comonomere überwiegend 1,3-Butadien sind. Der Gehalt von 1,2-Einheiten beträgt in der Regel 4 bis 80 mol% und der von cis-1,4-Einheiten mehr als 80 mol%.

Denkbar sind such Styrol-Butadien-Isopren-Terpolymere.

### Polyisopren

Darunter werden Homo- und Copolymere von Isopren verstanden, die natürlichen oder bevorzugt synthetischen Ursprungs sein können.

Bei diesen beträgt der Anteil von cis-1,4-Einheiten mindestens 90 mol%, bevorzugt mindestens 98 mol%.

### Butylkautschuk

Dabei handelt es sich um Copolymere von 85 bis 99,5 mol%, bevorzugt 90 bis 99,5, besonders bevorzugt 95 bis 99,5 mol% C₄-C₇-Isoolefinen mit 0,5 bis 15 mol%, bevorzugt 0,5 bis 10, besonders bevorzugt 0,5 bis 5 mol% C₄-C₁₄-konjuguierten Dienen.

Bevorzugtes Isoolefin ist Isobuten, bevorzugte konjugierte Diene sind 1,3-Butadien und Isopren, besonders bevorzugt Isopren.

Der Butylkautschuk weist ein viskositätsmittleres Molekulargewicht von 100000 bis 1500000, bevorzugt 250000 bis 800000 auf.

Die Ausgangsstoffe für die Synthesekautschuke, bevorzugt 1,3-Butadien, Isopren, 2,3-Dimethyl-1,3-butadien, Styrol und/oder Isobuten, besonders bevorzugt 1,3-Butadien, Isopren und/oder Isobuten können zumindest teilweise, bevorzugt vollständig aus nachwachsenden Quellen stammen. Deren Anteil an den gesamten eingesetzten Monomeren, gemessen gemäß ASTM D 6866 (siehe unten), beträgt dabei mit Vorteil mindestens 1 Gew%, bevorzugt mindestens 2, besonders bevorzugt mindestens 10, ganz besonders bevorzugt mindestens 25 und insbesondere mindestens 50 Gew%. Der Anteil an Monomeren aus nachwachsenden Quellen kann bis zu 100 Gew% betragen, bevorzugt bis zu 95, besonders bevorzugt bis zu 90, ganz besonders bevorzugt bis zu 85 und insbesondere bis zu 80 Gew% betragen.

### Plastifizierer

Plastifizierer (Prozeßöle) verbessern die Verarbeitbarkeit der Zusammensetzung, zumeist handelt es sich bei diesen um Ester von aliphatischen Säuren, beispielsweise Fettsäureester und Fettsäureglyceride, bevorzugt natürlich vorkommende Öle, wie Sonnenblumenöl oder Rapsöl, oder Kohlenwasserstoffe, wie paraffinische Öle, aromatische Öle, napthenische Petroleumöle und Polybutenöle.

Weiterhin als Plastifizierer geeignet sind solche Harze, wie sie als Tackifier für Klebstoffe und Farben bekannt sind. Bei diesen handelt es sich bevorzugt um Copolymere von Cs-Fraktionen von Naphtha oder Steamcrackerausträgen mit Vinylaromaten, besonders um Copolymere von 1,3-Butadien, 1-Buten, 2-Butenen, 1,2-Butadien, 3-Methyl-1-buten, 1,4-Pentadien, 1-Penten, 2-Methyl-1-buten, 2-Pentene, Isopren, Cyclopentadien, das auch als Dicyclopentadien Dimer vorliegen kann, Piperylen, Cyclopenten, 1-Methylcyclopenten, 1-Hexen, Methylcyclopentadiene oder Cyclohexen. Besonders handelt es sich um Copolymere von Cyclopentadien und/oder Dicyclopentadien mit Vinylaromaten, besonders Styrol, α-Methylstyrol, o-, m- oder p-Methylstyrol oder Divinylstyrol. Diese Vinylaromaten sind Bestandteil der Cs-Fraktionen von Naphtha oder Steamcrackerausträgen.

Bevorzugte Harze als Plastifizierer sind Cyclopentadien und/oder Dicyclopentadien-Copolymere, Cyclopentadien und/oder Dicyclopentadien-Styrol-Copolymere, Polylimonene, Limonen-Styrol-Copolymere, Limonen- Cyclopentadien und/oder Dicyclopentadien-Copolymere, Cs-Fraktions-Styrol-Copolymere sowie C₅-Fraktions-C₉-Fraktions-Copolymere.

### Füllmittel

Beispiele für Füllmittel sind Kalziumcarbonat, Tone, Glimmer, Kieselerde, Silikate, Talkum, Bentonit, Titandioxid, Aluminiumoxid, Zinkoxid und Ruß sein, bevorzugt Zinkoxid, Silikate und Ruß.

Typische Teilchengrößen liegen im Bereich von 0,0001 bis 100 µm.

Unter Silikaten werden hier Derivate der Kieselsäure verstanden, auch in Form ihrer Kalzium- oder Aluminiumverbindungen. Die Silikate können aus Lösung oder pyrogen erhalten werden und kolloid oder gefällt vorliegen. Bevorzugt werden hochdispergierbare Silikate eingesetzt.

Die BET-Oberfläche beträgt in der Regel weniger als 450 m²/g, bevorzugt 30 bis 400, besonders bevorzugt von 100 bis 250 m² /g und vorzugsweise von 130 bis 220 m² /g, eine CTAB-Oberfläche von 100 bis 250 m² /g und vorzugsweise von 150 bis 200 m²/g, eine ölaufnahme an DBP von 150 bis 250 ml/100 g sowie eine mittlere Projektionsfläche der Aggregate von mehr als 8500 nm² und vorzugsweise 9000 bis 11000 nm² vor dem Einsatz und von 7000 bis 8400 nm² nach dem thermomechanischen Mischen mit einem Elastomer aufweist.

Das ausgewählte spezielle Siliciumdioxid kann allein oder in Gegenwart anderer Füllstoffe, wie beispielsweise von Ruß oder eines anderen herkömmlichen Siliciumdioxids, eingesetzt werden.

Als in der besonders geeignetes Siliciumdioxid eignet sich beispielsweise das nach dem in der europäischen Patentanmeldung EP-A-157703 beschriebenen Verfahren erhaltene Siliciumdioxid.

Die BET-Oberfläche, die CTAB-Oberfläche sowie die Ölaufnahme werden nach den in der europäischen Patentanmeldung EP-A-157703 beschriebenen Verfahren gemessen. Die mittlere Projektionsfläche des Siliciumdioxids wird ermittelt nach dem Verfahren wie beschrieben in DE 69206445 T2, Seite 8, letzter Absatz bis Seite 9, erster Absatz.

### Antioxidans

Antioxidantien wirken gegen einen oxidativen Abbau, insbesondere sind p-Phenylendiamine zu nennen, beispielsweise N,N'-alkyl- oder aryldisubstituierte p-Phenylendiamine, besonders bevorzugt ist N-(1,3-Dimethylbutyl)-N'-phenyl-1,4-phenylenediamin.

### Härter, Vernetzer, Aktivatoren

Die Kautschukzusammensetzungen werden mit Hilfe mindestens eines Härters und mindestens eines Vernetzers umgesetzt, die dem Fachmann auf diesem Gebiet bekannt sind.

Beispiele dafür sind organische Peroxide und Polyamine.

Insbesondere wird dafür Schwefel als Vulkanisierungsagens verwendet.

Als Aktivatoren für den Vulkanisierungsprozeß werden Amine, Diamine, Guanidine, Thioharnstoffe, Thiatole, Thiram, Sulfenamide, Sulfenimide, Thiocarbamate und Xanthate eingesetzt. Besonders geeignet ist N-Cyclohexylbenzothiazol-2-sulfenamid (CBS).

Als Vernetzer können Schwefel, Metalloxide, Fettsäuren, besonders Stearinsäure, und insbesondere Organosilan-Vernetzer (siehe unten bei den Silan-Kopplungsmitteln) eingesetzt werden, beispielsweise Vinyl triethoxysilan, Vinyl-tris-(beta-methoxyethoxy)silan, Methacryloylpropyltrimethoxysilan, gamma-Amino-propyl triethoxysilan, gamma-Mercaptopropyltrimethoxysilan und dergleichen.

In einer besonderen Ausführungsform wird bis-(3-Triethoxysilylpropyl)tetrasulfid eingesetzt.

Als Metalloxide können eingesetzt werden ZnO, CaO, MgO, Al₂O₃, CrOa, TiOz, FeO, Fe₂O₃ und NiO. Diese können als Oxide oder als die entsprechende Fettsäureverbindung eingesetzt werden, bevorzugt als Stearat.

Unter diesen ist Zinkoxid bevorzugt.

### Silan-Kopplungsmittel

Typische Kopplungsmittel sorgen für eine stabile chemische und/oder physikalische Wechselwirkung zwischen den einzelnen Bestandteilen, beispielsweise Füllmittel und Kautschuken.

Typischerweise handelt es sich um Schwefel-haltige Verbindungen, Organosilane oder Polysiloxane.

Bevorzugt sind solche Kopplungsmittel, die eine Polysulfidgruppe und eine Alkoxysilylgruppe tragen, besonders bevorzugt sind Silane polysulfide, beispielsweise Bis((C₁-C₄)alkoxy(C₁-C₄)alkylsilyl(C₁-C₄)alkyl)polysulfide, (besonders Disulfide, Trisulfide oder Tetrasulfide), wie zum Beispiel Bis(3-trimethoxysilylpropyl) polysulfid oder Bis(3-triethoxysilylpropyl)polysulfid. Weitere Beispiele sind Bis(3-triethoxysilylpropyl)tetrasulfid (TESPT) der Formel [(C₂H₅O)₃Si(CH₂)₃S₂]₂, oder Bis(triethoxysilylpropyl)disulfid (TESPD) der Formel [(C₂H₅O)₃Si(CH₂)₃S]₂. Andere Beispiele sind Bis(mono(C₁-C₄)alkoxy di(C₁-C₄)alkylsilylpropyl)polysulfid, besonders Disulfide, Trisulfide oder Tetrasulfide), insbesondere Bis(monoethoxydimethylsilylpropyl)tetrasulfid.

### Zusammensetzung

Der Butylkautschuk macht beispielsweise in der Laufflächenmischung eine Fahrzeugreifens 5 bis 40, bevorzugt 5 bis 25 phr aus. Mit "phr" (parts per hundred rubber) wird die Zusammensetzung bezogen auf die 100 Massenteile des Polymerblends angegeben.

Polybutadiene können 30 bis 50 phr, Styrol-Butadien-Copolymere 40 bis 70 und Polyisoprene 0 bis 20 phr ausmachen, mit der Maßgabe, daß die Summe dieser Polymere 100 phr ergeben. Alle Nicht-Kautschukbestandteile werden auf die Summe dieser Polymere bezogen.

Der Anteil der Füllmittel, besonders Ruß und Silikate, beträgt in der Regel 20 bis 200 phr, bevorzugt 30 bis 150 phr.

Der Anteil an Plastifizierern beträgt in der Regel 10 bis 30 phr.

Erfindungsgemäß werden diesen Kautschuken die Umsetzungsprodukte von Polyisobuten mit elementarem Schwefel sowie optional deren Hydrolyseprodukte zugesetzt.

Polyisobuten und Polyisobutenderivate werden im folgenden näher beschrieben:
Für die Herstellung solcher iso-Buten in einpolymerisierter Form enthaltender Homo- oder Copolymere eignen sich als Isobuten-Quelle sowohl Rein-Isobuten als auch Isobuten-haltige C4-Kohlenwasserstoffströme, beispielsweise C4-Raffinate, insbesondere "Raffinat 1", C4-Schnitte aus der Isobutan-Dehydrierung, C4-Schnitte aus Steamcrackern und aus FCC-Crackern (fluid catalysed cracking), sofern sie weitgehend von darin enthaltenem 1,3-Butadien befreit sind. Ein C4-Kohlenwasserstoffstrom aus einer FCC-Raffinerieeinheit ist auch als "b/b"-Strom bekannt. Weitere geeignete Isobuten-haltige C4-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete C4-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten C4-Kohlenwasserstoffströmen im Bereich von 40 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim erfindungsgemäßen Polymerisationsverfahren verhalten sich die unverzeigten Butene im Raffinat 1 in der Regel praktisch inert und nur das Isobuten wird polymerisierteiner bevorzugten Ausführungsform setzt man als Monomerquelle für die Polymerisation einen technischen C4-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit ein.

Insbesondere bei Verwendung eines Raffinat 1-Stromes als Isobutenquelle hat sich die Verwendung von Wasser als alleinigem oder als weiterem Initiator bewährt, vor allem wenn man bei Temperaturen von -20°C bis +30°C, insbesondere von 0°C bis +20°C, polymerisiert. Bei Temperaturen von -20°C bis +30°C, insbesondere von 0°C bis +20°C, kann man bei Verwendung eines Raffinat 1-Stromes als Isobutenquelle jedoch auch auf den Einsatz eines Initiators verzichten.

Das Isobuten bzw. der Isobuten-haltige C4-Kohlenwasserstoffstrom kann zumindest teilweise, bevorzugt vollständig aus nachwachsenden Quellen stammen, wie es beispielsweise in WO 2012/40859 A1 beschrieben wird, dort besonders von Seite 5, Zeile 9 bis Seite 6, Zeile 24. Der Anteil an Isobuten aus nachwachsenden Quellen an dem gesamten eingesetzten Isobuten, gemessen gemäß ASTM D 6866, wie beschrieben in WO 2012/40859 A1, beträgt dabei mit Vorteil mindestens 1 Gew%, bevorzugt mindestens 2, besonders bevorzugt mindestens 10, ganz besonders bevorzugt mindestens 25 und insbesondere mindestens 50 Gew%. Der Anteil an Isobuten aus nachwachsenden Quellen kann bis zu 100 Gew% betragen, bevorzugt bis zu 95, besonders bevorzugt bis zu 90, ganz besonders bevorzugt bis zu 85 und insbesondere bis zu 80 Gew% betragen.

Das aus nachwachsenden Rohstoffen erhaltene Isobuten kann dadurch charakterisiert werden, dass das ¹⁴C/¹²C-Isotopenverhältnis bestimmt wird, bevorzugt gemäß der ASTM D 6866 ("Determining the Biobased Content of Natural Range Materials Using Radiocarbon and Isotope Ratio Mass Spectrometry Analysis").

Gemäß dieser Testmethode wird das ¹⁴C/¹²C-Isotopenverhältnis einer Probe gemessen und verglichen mit dem ¹⁴C/¹²C-Isotopenverhältnis in einem standardisierten 100% biobasierten Material. Als Ergebnis wird der Gehalt an biobasiertem Anteil in dem Muster erhalten.

Die Anwendung von ASTM-D6866 zur Ableitung des "biobasierten Gehalts" basiert auf den gleichen Konzepten wie eine Radiokohlenstoffdatierung, aber ohne Verwendung der Altersgleichungen. Die Analyse wird durchgeführt, indem ein Verhältnis der Menge an Radiokohlenstoff (¹⁴C) in einer unbekannten Probe bestimmt wird im Vergleich zu der eines modernen Referenzstandards. Diese Kennzahl wird in Prozent angegeben mit der Einheit "pMC" (percent modern carbon, Prozent moderner Kohlenstoff). Wenn es sich bei dem zu analysierenden Material um ein Gemisch aus heutigem Radiokohlenstoff handelt und fossilem Kohlenstoff (mit sehr geringem Radiokohlenstoffgehalt), so korreliert der erhaltene pMC-Wert direkt mit der Menge des in der Probe vorhandenen Biomassematerials.

"Biobasierte Materialien" sind organische Materialien, aus Kohlenstoff, der aus vor kurzem (auf einer menschlichen Zeitskala) aus der Atmosphäre mit Hilfe von Sonnenenergie (Photosynthese) fixiertem CO₂ stammt. An Land wird dieses CO₂ aufgenommen oder fixiert durch Pflanzen (z. B. landwirtschaftliche Nutzpflanzen oder forstwirtschaftliche Pflanzungen). In den Ozeanen wird das CO₂ durch Photosynthese von und in Bakterien oder Phytoplankton gebunden oder fixiert. Somit hat ein biobasiertes Material ein Isotopenverhältnis von ¹⁴C/¹²C größer als 0. Demgegenüber besitzt ein fossiles Material ein ¹⁴C/¹²C-Isotopenverhältnis von etwa 0.

Ein kleiner Teil der Kohlenstoffatome des Kohlendioxids in der Atmosphäre ist das radioaktive Isotop ¹⁴C, das entsteht, wenn atmosphärischer Stickstoff von einem durch kosmische Strahlung erzeugten Neutron getroffen wird, wodurch dem Stickstoff ein Proton verloren geht und sich Kohlenstoff der Atommasse 14 (¹⁴C) bildet, der dann sofort zu Kohlendioxid oxidiert wird. Ein kleiner, aber messbarer Anteil des atmosphärischen Kohlenstoffs liegt in Form von ¹⁴CO₂ vor. Atmosphärisches Kohlendioxid wird von grünen Pflanzen assimiliert, um während des als Photosynthese bekannten Prozesses organische Moleküle herzustellen. Praktisch alle Lebensformen auf der Erde sind auf die Produktion organischer Moleküle durch grüne Pflanzen angewiesen, um die chemische Energie zu erzeugen, die Wachstum und Fortpflanzung ermöglichen. Daher wird das ¹⁴C, das sich in der Atmosphäre bildet, schließlich Teil aller Lebensformen und ihrer biologischen Produkte, die Biomasse anreichern und Organismen, die sich von Biomasse mit ¹⁴C ernähren. Im Gegensatz dazu weist Kohlenstoff aus fossilen Quellen, besonders Erdöl oder Kohle, nicht das charakteristische ¹⁴C:¹²C-Verhältnis von erneuerbaren organischen Molekülen auf, die aus atmosphärischem Kohlendioxid gewonnen werden.

In einer bevorzugten Ausführungsform der vorliegenden Erfindung weist das in dem Polyisobuten eingesetzte Isobuten einen biobasierten Anteil, gemessen als ¹⁴C:¹²C-Verhältnis ASTM-D6866 von mehr als 0%, bevorzugt mindestens 1%, besonders bevorzugt mindestens 5%, ganz besonders bevorzugt mindestens 10%, insbesondere mindestens 20% und speziell mindestens 25% auf.

Mit Vorteil kann dieser biobasierte Anteil mindestens 30%, bevorzugt mindestens 40, besonders bevorzugt mindestens 50, ganz besonders bevorzugt mindestens 66, insbesondere mindestens 75 und speziell mindestens 85% betragen.

Bei einem Anteil von mindestens 90%, bevorzugt mindestens 95%, besonders bevorzugt mindestens 98% und sogar 100% kann dies als deutlich überwiegend oder vollständig biobasiertes Isobuten bezeichnet werden.

Gemäß dieser Ausführungsform werden die Ressourcen geschont und das Produkt zumindest teilweise mit nachwachsenden Rohstoffen hergestellt.

In einer anderen Ausführungsform der vorliegenden Erfindung kann das in die Polymerisation eingesetzte Isobuten vollständig aus nachwachsenden Rohstoffen erhalten werden oder aus Abmischungen von Isobuten aus nachwachsenden und aus fossilen Quellen bestehen.

Diese Ausführungsform ist besonders dort und solange bevorzugt, wie Isobuten aus nachwachsenden Quellen nicht in industriell ausreichenden Mengen und ökonomisch verfügbar ist.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können, wenn auch weniger bevorzugt, auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Erfindungsgemäß werden die Umsetzungsprodukte von Polyisobuten mit elementarem Schwefel der Kautschukmischung in der Regel in Mengen von 2 bis 20, bevorzugt 4 bis 14, besonders bevorzugt 5 bis 10 phr zugegeben.

In der Regel werden die Umsetzungsprodukte von Polyisobuten mit elementarem Schwefel der Kautschukmasse zusammen mit den anderen Bestandteilen zugegeben und in einem Kneter oder Extruder zur Einleitung der Vulkanisation erhitzt. Es kann auch vorteilhaft sein, zunächst die Kautschukmasse und die Füllmaterialien zusammen mit den Umsetzungsprodukten von Polyisobuten mit elementarem Schwefel innig zu vermischen und später dann die anderen Bestandteilen, besonders Antioxidans, Aktivator und/oder Plastifizierer hinzuzugeben.

Die Verfahren zur Vulkanisierung und Herstellung von Kautschukmassen sind an sich bekannt und sind auf den Einsatz der Umsetzungsprodukte von Polyisobuten mit elementarem Schwefel übertragbar.

Es stellt einen Vorteil der Umsetzungsprodukte von Polyisobuten mit elementarem Schwefel dar, dass sie eine vorteilhafte Wirkung auf die Verbesserung mindestens einer der folgenden Eigenschaften
- Dispersionskoeffizient
- Teilchengröße
- Nasshaftung
- Abriebsfestigkeit
- Rollwiderstand
von Kautschuke-enthaltenden Reifen haben.

Die Umsetzungsprodukte von Polyisobuten mit elementarem Schwefel sind besonders geeignet zur Verbesserung der Dispergierung der Füllstoffe, besonders von Silika in den Kautschukmassen.

Ferner zeigen sie einen besonderen Vorteil zur Verringerung des Rollwiderstandes.

Ferner zeigen die Umsetzungsprodukte von Polyisobuten mit elementarem Schwefel einen Vorteil hinsichtlich Nassgriff bei niedrigen Temperaturen (-10 °C) und/oder Rollwiderstand und/oder Abriebsbeständigkeit der diese enthaltenden Reifen. Bevorzugt verbessern die erfindungsgemäßen Verbindungen mindestens zwei dieser drei Eigenschaften. Es stellt einen besonderen Vorteil dar, dass die Umsetzungsprodukte von Polyisobuten mit elementarem Schwefel gleichzeitig einen Vorteil hinsichtlich Nassgriff bei niedrigen Temperaturen (-10 °C) und Rollwiderstand und Abriebsbeständigkeit der Reifen aufweisen.

Durch die Erhöhung der Abriebsfestigkeit der Reifen wird die Freisetzung von Mikroplastik aus dem Abrieb von Reifen beim Betrieb von Kraftfahrzeugen verringert.

Es stellt einen Vorteil der Umsetzungsprodukte von Polyisobuten mit elementarem Schwefel dar, dass sie die Wirkung von Vulkanisierungsmitteln in Kautschukmassen verstärken und die Vulkanisation beschleunigen. Dies wurde in der WO 2022/223345 nicht erkannt, wo diese Verbindungen als Vulkanisierungsagentien beschrieben wurden.

Somit stellt die Verwendung der Umsetzungsprodukte von Polyisobuten mit elementarem Schwefel in Kautschukmassen zur Verkürzung der Vulkanisierungszeit eine weitere erfindungsgemäße Ausführungsform dar.

Demzufolge ist ein weiterer Gegenstand der vorliegenden Erfindung ein Verfahren zur Beschleunigung der Vulkanisierung in der Herstellung von Kautschuke-enthaltenden Reifen, in dem man
- mindestens einen Kautschuk mit
- Ruß und/oder Silikaten und
- mindestens einem Prozesshilfsmittel und/oder Additiv zur Verbesserung mindestens einer Gebrauchseigenschaft des Reifens

in einem Kneter und/oder Extruder vermischt,
dadurch gekennzeichnet, dass man der Kautschukmasse vor und/oder während der Verarbeitung mindestens ein Umsetzungsprodukt von Polyisobuten mit elementarem Schwefel zusetzt.

Ein weiterer Gegenstand sind Kautschukmassen, enthaltend
- mindestens einen Kautschuk, ausgewählt aus der Gruppe bestehend aus Isobuten-Isopren-Kautschuk, Styrol-Butadien-Kautschuk und Naturkautschuk,
- mindestens einen Füllstoff, ausgewählt aus der Gruppe bestehend aus Kalziumcarbonat, Tone, Glimmer, Kieselerde, Silikate, Talkum, Bentonit, Titandioxid, Aluminiumoxid, Zinkoxid und Ruß,
- mindestens einem Antioxidans, bevorzugt einem p-Phenylendiamin,
- mindestens einem Peroxid und/oder Polyamin als Härter und/oder Vernetzer,
- mindestens einem Aktivatoren für den Vulkanisierungsprozeß ausgewählt aus der Gruppe bestehend aus Aminen, Diaminen, Guanidinen, Thioharnstoffen, Thiatolen, Thiramen, Sulfenamiden, Sulfenimiden, Thiocarbamaten und Xanthaten,
- mindestens einem Silanvernetzer ausgewählt aus der Gruppe bestehend aus Bis((C₁-C₄)alkoxy(C₁-C₄)alkylsilyl(C₁-C₄)alkyl)polysulfide, (besonders Disulfide, Trisulfide oder Tetrasulfide), Bis(3-trimethoxysilylpropyl), Bis(3-triethoxysilylpropyl)polysulfid, Bis(3-triethoxysilylpropyl)tetrasulfid (TESPT) der Formel [(C₂H₅O)₃Si(CH₂)₃S₂]₂, und Bis(triethoxysilylpropyl)disulfid (TESPD) der Formel [(C₂H₅O)₃Si(CH₂)₃S]₂, und mindestens einem Umsetzungsprodukt von Polyisobuten mit elementarem Schwefel.

Des weiteren sind die Umsetzungsprodukte von Polyisobuten mit Schwefel geeignet, während der Herstellung von Kautschukmassen für Reifen freigesetzte Alkohole R⁶OH, besonders Ethanol zu binden, so dass während der Herstellung geringere Emissionen freigesetzt werden.

Dabei bilden sich vermutlich die folgenden Produkte: 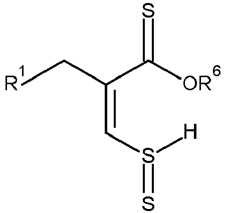 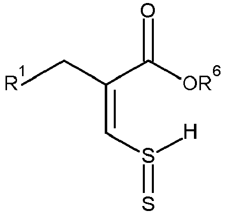 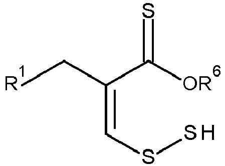 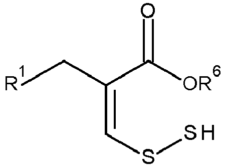 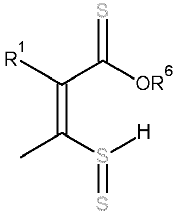 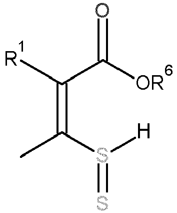 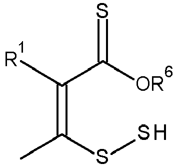 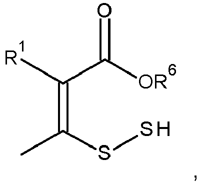 worin R⁶ der Rest des freigesetzten Alkohols R⁶OH ist, bevorzugt Ethyl.

Diese Verbindungen zeigen ihrerseits die gleichen Wirkungen wie die erfindungsgemäßen Verbindungen, nämlich zur Verbesserung der Dispergierung der Füllstoffe, besonders von Silika in den Kautschukmassen, zur Verringerung des Rollwiderstandes, Vorteil hinsichtlich Nassgriff bei niedrigen Temperaturen (-10 °C) und/oder Rollwiderstand und/oder Abriebsbeständigkeit der diese enthaltenden Reifen. Bevorzugt verbessern die Verbindungen mindestens zwei dieser drei Eigenschaften. Es stellt einen besonderen Vorteil dieser Verbindungen dar, dass sie gleichzeitig einen Vorteil hinsichtlich Nassgriff bei niedrigen Temperaturen (-10 °C) und Rollwiderstand und Abriebsbeständigkeit der Reifen aufweisen. Ferner wird durch die Erhöhung der Abriebsfestigkeit der Reifen die Freisetzung von Mikroplastik aus dem Abrieb von Reifen beim Betrieb von Kraftfahrzeugen verringert und die Wirkung von Vulkanisierungsmitteln in Kautschukmassen wird verstärkt und die Vulkanisation beschleunigt.

Es stellt einen weiteren Vorteil der vorliegenden Erfindung dar, dass die Umsetzungsprodukten von Polyisobuten, bevorzugt hochreaktivem Polyisobuten, mit elementarem Schwefel in der Lage sind mit anderen Bestandteilen der Kautschukmassen zu reagieren, beispielsweise mit dem Silan-Kopplungsmittel. Dadurch erhöhen sie die Kompatibilität der einzelnen Komponenten der Kautschukmassen miteinander. Dabei werden idealisiert die folgenden Strukturen gebildet: 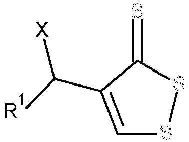 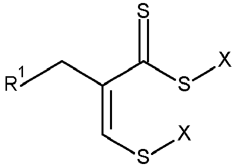 oder 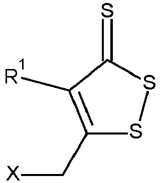 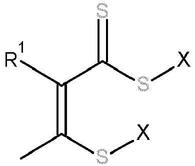 worin
R¹ wie oben definiert ist,
X für-(S)ₓ-R²⁵-Si(OR²⁶)₃,
x für 1, 2, 3 oder 4
R²⁵ ein Alkylenrest mit 1 bis 6 Kohlenstoffatomen, bevorzugt 1 bis 4 Kohlenstoffatomen , besonders bevorzugt 2 oder 3 Kohlenstoffatomen ist und ganz besonders bevorzugt ausgewählt ist aus der Gruppe bestehend aus Methylen, 1,2-Ethylen, 1,2-Propylen, 1,3-Propylen, 1,4-Butylen, 5-oxa-1,5-pentylen und 1,6-Hexylen, insbesondere 1,3-Propylen ist, und R²⁶ für C₁- bis C₆-Alkyl, bevorzugt C₁- bis C₄-Alkyl, besonders bevorzugt Methyl, Ethyl, n-Propyl, iso-Propyl, n-Butyl oder tert-Butyl, ganz besonders bevorzugt Methyl, Ethyl oder n-Butyl, insbesondere Methyl oder Ethyl und speziell Methyl,
   stehen.

Auch diese Verbindungen zeigen ihrerseits die gleichen Wirkungen wie die erfindungsgemäßen Verbindungen, nämlich zur Verbesserung der Dispergierung der Füllstoffe, besonders von Silika in den Kautschukmassen, zur Verringerung des Rollwiderstandes, Vorteil hinsichtlich Nassgriff bei niedrigen Temperaturen (-10 °C) und/oder Rollwiderstand und/oder Abriebsbeständigkeit der diese enthaltenden Reifen. Bevorzugt verbessern die Verbindungen mindestens zwei dieser drei Eigenschaften. Es stellt einen besonderen Vorteil dieser Verbindungen dar, dass sie gleichzeitig einen Vorteil hinsichtlich Nassgriff bei niedrigen Temperaturen (-10 °C) und Rollwiderstand und Abriebsbeständigkeit der Reifen aufweisen. Ferner wird durch die Erhöhung der Abriebsfestigkeit der Reifen die Freisetzung von Mikroplastik aus dem Abrieb von Reifen beim Betrieb von Kraftfahrzeugen verringert und die Wirkung von Vulkanisierungsmitteln in Kautschukmassen wird verstärkt und die Vulkanisation beschleunigt. Insbesondere verbesssern sie die Kompatibilität mit den Silikaten in den Kautschukmassen.

Die vorliegende Erfindung wird durch die nachstehenden Beispiele illustriert, ohne darauf beschränkt zu sein.

### Beispiele

### Herstellungsbeispiele

### Verbindung 1

100,00 g Polyisobuten (Glissopal^{®} 1000 der BASF SE, Ludwigshafen, zahlenmittleres Molegulargewicht Mn (bestimmt per GPC) ca. 1000 g/mol, Polydispersität ca. 1,6, Gehalt an alpha-Doppelbindungen (bestimmt per ¹³C NMR) ca. 88%, beta-Doppelbindungen 6%, wurden mit 17,10 g (0,53 mol) Schwefel versetzt und für eine Stunde bei 220 °C gerührt. Anschließend wurde die Reaktionsmischung eine weitere Stunde bei 240 °C gerührt. Die Reaktionsmischung wird auf Raumtemperatur abgekühlt, mit 150 ml Heptan versetzt und filtriert. Das Lösungsmittel im Filtrat wurde im Vakuum entfernt (Ausbeute = 101,90 g).

### Methodenbeschreibung

### Verbesserung des Dispersionskoeffizients

Die Makrodispersion (Dispersions Index Analyse System, DIAS) der unverteilten Füllstoffagglomerate (Partikel) wird bestimmt, indem mittels eines Lichtmikroskops bei 125facher Vergrößerung von mindestens 10 Bildern rechnergestützt die Reflexion der Flächen der Partikel mit der gesamten Beobachtungsfläche verglichen wird. Daraus ergibt sich der Dispersionsgrad (Angabe in Prozent %), wobei über Korrekturfaktoren der Füllstoffvolumengehalt und das Leervolumen der Füllstoffe berücksichtigt wird. Angestrebt wird ein hoher Dispersionskoeffizient.

### Bestimmung der Partikelgröße

Der mittlere Durchmesser der Partikel wurde optisch zusammen mit der Berechnung des Dispersionskoeffizients bestimmt.

Eine geringe Partikelgröße ist vorteilhaft.

### Nassgriff bei niedrigen Temperaturen (-10 °C) und Rollwiderstand

Von der hergestellten Kautschukmasse wird ein Streifenprüfkörper (40 × 10 × 2 mm) in einem ARES-Prüfgerät der Firma Rheometric Scientific^{™} einer dynamisch-mechanischen Analyse (DMA) unterzogen.

Messparameter:
Temperaturbereich -60 bis 80 °C
Frequenz 1 Hz
Amplitude 0,5 %

Der tan(δ)-Wert bei -10 °C wird als Maß für die Traktion auf nasser Fahrbahn bei niedriger Temperatur angesehen, der tan(δ)-Wert bei +60 °C als Maß für den Rollwiderstand. Hohe Werte für tan(δ)_{-10°C} bedeuten einen hohen Nassgriff und sind vorteilhaft, niedrige Werte für tan(δ)_{60°C} bedeuten einen geringen Rollwiderstand und sind anzustreben.

### Abriebsbeständigkeit

Der Abrieb wurde nach DIN ISO 4649 in einer Abriebsapparatur der Fa. Frank bei einer Last von 10 N über eine Gleitlänge von 40 m und einer Rotation von 40 m⁻¹ bestimmt. Der Abriebsindex wird in Prozent [%] angegeben, höhere Werte sind positiv.

### Vulkanisierungsbeschleunigung

Eine Silica-haltige Kautschukmasse wie unten beschrieben wurde in bei 160 °C bei einer Amplitude von 0,5% und einer Frequenz von 1.67 Hz in einem Vulkameter Monsanto Rheometer MDR 2000E behandelt, wobei das Drehmoment über die Zeit verfolgt wurde. Der Anstieg des Drehmoments beschreibt den Fortschritt der Vulkanisation.

Des weiteren wurde die Kautschukmasse bei 160 °C bei einer Last von 280 bar in einer Apparatur von Rucks Maschinenbau KV 207.00 zur Bestimmung des t90-Wertes vulkanisiert.

Eine Verkürzung der t₉₀-Zeit ist vorteilhaft.

### Anwendungsbeispiele

Es wurden Silica-haltige ("Referenz") Kautschukmassen als Vergleich bzw. mit den erfindungsgemäßen Additiven hergestellt mit folgender Zusammensetzung:

| | | Menge [phr] |
|---|---|---|
| Funktion | Bezeichnung | Referenz |
| Kautschuk | SBR (high-Tg) NS616 ¹⁾ | 100 |
| Silica | U7000 GR ²⁾ | 80 |
| Silan | Si 69 ³⁾ | 8 |
| Weichmacher | Vivatec 500 | 37,5 |
| Aktivator | ZnO | 2,5 |
| Aktivator | Stearinsäure | 1 |
| Antioxidant | IPPD ⁴⁾ | 2 |
| Beschleuniger | DPG ⁵⁾ | 2 |
| Beschleuniger | CBS ⁶⁾ | 1,7 |
| Vernetzer | Schwefel | 1,4 |

1) Kautschuk Nipol NS616 (modifiziertes S-SBR, Styrolgehalt: 20 Gew%, Vinylgruppengehalt:
   67 mol%, SP Wert: 17,25 (J/cm³)^{1/2}, Tg: -25°C, Mw: 510,000, non-oil-extended) hergestellt durch ZEON CORPORATION (SBR1 in EP 3263360 A1, Absatz [0054])
2) Amorphes SiOz, Ultrasil 7000 GR von Evonik
3) Bis(triethoxysilylpropyl)tetrasulfid
4) IPPD: N-Isopropyl-N'-phenyl-1,4-phenylenediamin
5) DPG: N,N'-Diphenylguanidin
6) CBS: N-Cyclohexylbenzothiazol-2-sulfenamid

### Erfindungsgemäße Kautschukmassen

Durch Zusatz der angegebenen Menge der erfindungsgemäßen Verbindungen wurden Silica-haltige Kautschukmasse K1 analog der Silica-haltigen Referenzkautschukmasse Referenz hergestellt. Zum Ausgleich wurde der Anteil an Weichmacher entsprechend verringert.

| | | Menge [phr] |
|---|---|---|
| Funktion | Bezeichnung | K1 |
| Kautschuk | SBR (high-Tg) NS616 | 100 |
| Silica | U7000 GR | 80 |
| Silan | Si 69 | 8 |
| | Verbindung 1 | 5 |
| Weichmacher | Vivatec 500 | 32,5 |
| Aktivator | ZnO | 2,5 |
| Aktivator | Stearinsäure | 1 |
| Antioxidant | IPPD | 2 |
| Beschleuniger | DPG | 2 |
| Beschleuniger | CBS | 1,7 |
| Vernetzer | Schwefel | 1,4 |

Diese erfindungsgemäßen Kautschukmassen wurden in den angegebenen Anwendungsbeispielen mit der Silica-haltigen Referenzkautschukmasse Referenz verglichen.

### Beispiel 1 (Verbesserung des Dispersionskoeffizients)

| | Dispersionskoeffizient [%] |
|---|---|
| Referenz | 61 |
| K1 | 71 |

### Beispiel 2 (Verringerung der Partikelgröße)

| | Partikelgröße |
|---|---|
| Referenz | 180 |
| K1 | 140 |

### Beispiel 3 (Nassgriff bei niedrigen Temperaturen (-10 °C))

| | Nassgriff (tan(δ)_{-10°C}) |
|---|---|
| Referenz | 0,83 |
| K1 | 1,00 |

### Beispiel 4 (Rollwiderstand)

| | Rollwiderstand |
|---|---|
| Referenz | 0,14 |
| K1 | 0,041 |

### Beispiel 5 (Abriebsbeständigkeit)

| | Abriebsbeständigkeit |
|---|---|
| Referenz | 129 |
| K1 | 139 |

### Beispiel 6 (Beschleunigung der Vulkanisierung)

| | t₉₀ [min] |
|---|---|
| Referenz | 18,60 |
| K3 | 16,82 |

## Patentansprüche

1. Verwendung von Umsetzungsprodukten von Polyisobuten, bevorzugt hochreaktivem Polyisobuten, mit elementarem Schwefel sowie deren Hydrolyseprodukte zur Verbesserung mindestens einer der folgenden Eigenschaften
- Dispersionskoeffizient
- Teilchengröße
- Nasshaftung
- Abriebsfestigkeit
- Rollwiderstand
von Kautschuke-enthaltenden Reifen
oder zur Beschleunigung der Vulkanisation in Kautschukmassen.

2. Verwendung gemäß einem der vorstehenden Ansprüche, **dadurch gekennzeichnet, daß** es sich bei dem Kautschuk um einen Isobuten-Isopren-Kautschuk handelt.

3. Verwendung gemäß einem der vorstehenden Ansprüche, **dadurch gekennzeichnet, daß** es sich bei dem Kautschuk um einen Styrol-Butadien-Kautschuk handelt.

4. Verwendung gemäß einem der vorstehenden Ansprüche zur Verbesserung gleichzeitig mindestens zweier, bevorzugt aller drei der folgenden Eigenschaften
- Nasshaftung
- Abreibsfestigkeit
- Rollwiderstand
von Kautschuke-enthaltenden Reifen.

5. Verwendung gemäß einem der Ansprüche 1 bis 4 zur Verringerung von Mikroplastik aus Abrieb von Reifen.

6. Verwendung gemäß einem der Ansprüche 1 bis 4 zur Verringerung des Kraftstoffverbrauchs und damit verbundener Emissionen durch Verringerung des Rollwiderstandes von Kautschuke-enthaltenden Reifen.

7. Verfahren zur Beschleunigung der Vulkanisierung in der Herstellung von Kautschuke-enthaltenden Reifen, in dem man
- mindestens einen Kautschuk mit
- Ruß und/oder Silikaten und
- mindestens einem Prozesshilfsmittel und/oder Additiv zur Verbesserung mindestens einer Gebrauchseigenschaft des Reifens
in einem Kneter und/oder Extruder vermischt,
**dadurch gekennzeichnet, dass** man der Kautschukmasse vor und/oder während der Verarbeitung mindestens ein Umsetzungsprodukt von Polyisobuten mit elementarem Schwefel wie beschrieben in Anspruch 1 zusetzt.

8. Verwendung und Verfahren gemäß einem der vorstehenden Ansprüche, **dadurch gekennzeichnet, daß** das Umsetzungsprodukt mindestens eines der beiden heterocyclischen Produkte 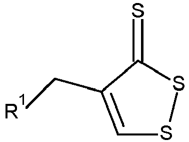 und 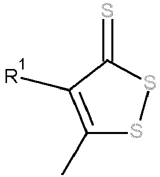 umfasst, worin der Rest R¹ das um eine Isobuteneinheit verkürzte Polyisobuten bedeutet, das als Ausgangsmaterial eingesetzt wurde.

9. Verwendung und Verfahren gemäß einem der vorstehenden Ansprüche, **dadurch gekennzeichnet, daß** das Umsetzungsprodukt zusätzlich mindestens eine Verbindung der folgenden Formeln 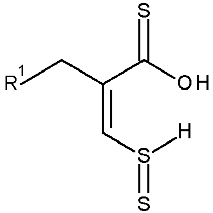 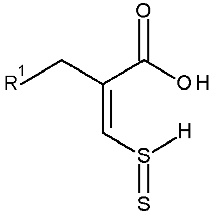 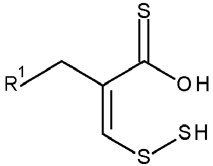 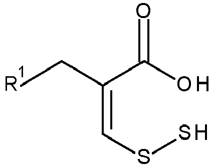 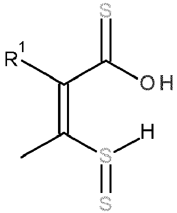 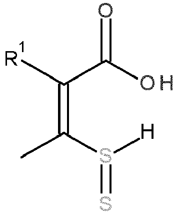 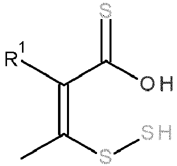 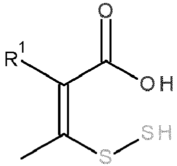 umfasst, worin der Rest R¹ das um eine Isobuteneinheit verkürzte Polyisobuten bedeutet, das als Ausgangsmaterial eingesetzt wurde.

10. Verwendung gemäß einem der vorstehenden Ansprüche, **dadurch gekennzeichnet, daß** der Anteil an Monomeren aus nachwachsenden Quellen an den Ausgangsstoffen für das eingesetzt Polyisobuten, gemessen gemäß ASTM D 6866, mindestens 1 Gew%, bevorzugt mindestens 2, besonders bevorzugt mindestens 10, ganz besonders bevorzugt mindestens 25 und insbesondere mindestens 50 Gew% und bis zu 100 Gew% beträgt.

11. Kautschukmasse, enthaltend
- mindestens einen Kautschuk, ausgewählt aus der Gruppe bestehend aus Isobuten-Isopren-Kautschuk, Styrol-Butadien-Kautschuk und Naturkautschuk,
- mindestens einen Füllstoff, ausgewählt aus der Gruppe bestehend aus Kalziumcarbonat, Tone, Glimmer, Kieselerde, Silikate, Talkum, Bentonit, Titandioxid, Aluminiumoxid, Zinkoxid und Ruß,
- mindestens einem Antioxidans, bevorzugt einem p-Phenylendiamin,
- mindestens einem Peroxid und/oder Polyamin als Härter und/oder Vernetzer,
- mindestens einem Aktivatoren für den Vulkanisierungsprozeß ausgewählt aus der Gruppe bestehend aus Aminen, Diaminen, Guanidinen, Thioharnstoffen, Thiatolen, Thiramen, Sulfenamiden, Sulfenimiden, Thiocarbamaten und Xanthaten,
- mindestens einem Silanvernetzer ausgewählt aus der Gruppe bestehend aus Bis((C₁-C₄)alkoxy(C₁-C₄)alkylsilyl(C₁-C₄)alkyl)polysulfide, (besonders Disulfide, Trisulfide oder Tetrasulfide), Bis(3-trimethoxysilylpropyl), Bis(3-triethoxysilylpropyl)polysulfid, Bis(3-triethoxysilylpropyl)tetrasulfid (TESPT) der Formel [(C₂H₅O)₃Si(CH₂)₃S₂]₂, und Bis(triethoxysilylpropyl)disulfid (TESPD) der Formel [(C₂H₅O)₃Si(CH₂)₃S]₂, und mindestens einem Umsetzungsprodukt von Polyisobuten, bevorzugt hochreaktivem Polyisobuten, mit elementarem Schwefel.

12. Kautschukmasse gemäß Anspruch 10, **dadurch gekennzeichnet, daß** der Anteil an Monomeren aus nachwachsenden Quellen an den Ausgangsstoffen für die Synthesekautschuke, gemessen gemäß ASTM D 6866, mindestens 1 Gew%, bevorzugt mindestens 2, besonders bevorzugt mindestens 10, ganz besonders bevorzugt mindestens 25 und insbesondere mindestens 50 Gew% und bis zu 100 Gew% beträgt.
